# EUROPÄISCHE PATENTSCHRIFT

(11) **EP 2 560 300 B1**
(45) Veröffentlichungstag und Bekanntmachung des Hinweises auf die Patenterteilung: **19.06.2019**
(21) Anmeldenummer: 12174276.1
(22) Anmeldetag: 29.06.2012
(51) Int. Cl.: H04B 7/185

(54) **Satelliten-Testsystem**
Satellite test system
Système de test pour satellite

(30) Priorität: 16.08.2011 DE 102011080994
(43) Veröffentlichungstag der Anmeldung: 20.02.2013
(73) Patentinhaber: Atos Convergence Creators GmbH, 1210 Wien (AT)
(72) Erfinder: Fuchs, Alfred, 2410 Hainburg/Donau (AT); Dworschak, Franz, 3012 Wolfsgraben (AT)
(74) Vertreter: Novagraaf Technologies

(56) Entgegenhaltungen:
- JP-A- H1 134 765
- JP-A- 2010 181 211
- US-A1- 2011 147 359

## Beschreibung

### Technisches Gebiet

Die Erfindung betrifft allgemein das Gebiet der Satellitentechnik. Im Speziellen bezieht sich die vorliegende Erfindung auf ein Satelliten-Testsystem, welches insbesondere zum Testen und/oder Simulieren von Satelliten-Systemen wie z.B. pyrotechnische und/oder thermoelektrische Systeme eines Satelliten geeignet ist.

### Stand der Technik

Unter dem Begriff Satellitentechnik werden üblicherweise jene Techniken und ingenieurswissenschaftlichen Methoden zusammengefasst, welche sich mit Bau und Betrieb von künstlichen Erdtrabanten - d.h. Satelliten - und Raumsonden auseinandersetzen. Ein Satellit kann technisch als eine Summe von Subsystemen betrachtet werden, von welchen hinsichtlich Satellitenbahn, Lageregelung, Energieversorgung, Missionszweck (z.B. Fernsehsatellit, Wettersatellit, Erdbeobachtungssatellit, etc.) und Telemetrie kooperiert wird. Zu diesen Subsystemen eines Satelliten kommen beispielsweise noch Trägerraketen, mit welchen der Satellit auf eine Umlaufbahn gebracht wird, sowie Systeme von Bodenstationen, welche den Betrieb gewährleisten.

Eine Basis der Satellitentechnik sind dabei integrierte Subsysteme, welche über den gesamten Satelliten verteilt sind und für einen Betrieb des Satelliten sorgen. Solche integrierten Subsysteme sind z.B. eine mechanische Struktur, Adapter und Gelenke, Energieversorgung (z.B. Solarzelle, Akkumulatoren, etc.), Verkabelung, Systeme zur aktiven wie passiven Temperaturkontrolle (z.B. Thermistoren, Thermoelemente, etc.), ein Antriebssystem für eine Lage- und Positionsregelung, Mess- und elektrische Kontrollsysteme sowie Sicherheits- und Pyrosysteme (z.B. für ein Absprengen von der Trägerrakete oder zum Öffnen der Solarpanele bei erreichter Umlaufbahn).

Da sowohl Bau wie auch in Betriebnahme eines Satelliten als auch die in Satelliten eingesetzte Hardware sehr kostspielig sind, müssen die jeweiligen Subsysteme bzw. Komponenten eines Satelliten vor einer Mission unabhängig von einander mit Hilfe von Satelliten-Testsystemen getestet werden können. Auf diese Weise sollen Fehlfunktionen während des Transports in All und/oder bei der Inbetriebnahme des Satelliten verhindert werden. Außerdem weisen unterschiedliche (d.h. große, kleine, wissenschaftliche und/oder kommerzielle) Satelliten je nach ihrer Mission unterschiedliche Parameter und Anforderungen in Bezug auf ihre Subsysteme auf. Daher müssen beispielsweise, manche Subsysteme und/oder deren Betriebsfälle (z.B. Temperaturkontrollsysteme, Pyrosysteme, etc.) simuliert werden, um eine entsprechende Funktionsweise zu testen und/oder ein entsprechendes Zusammenarbeiten von Subsystemen über zugehörige Schnittstellen zu überprüfen.

Aufgrund einer Vielzahl von verschiedenen integrierten Subsystemen, von welchen für eine ordnungsgemäße Inbetriebnahme und eine der jeweiligen Mission entsprechenden Betrieb eines Satelliten gesorgt werden, und der jeweiligen Schnittstellen, von welchen eine entsprechende Zusammenarbeit der Subsysteme geregelt wird, sind verschiedene Tests bzw. Simulationen der jeweiligen Subsysteme und/oder deren Schnittstellen notwendig. Meist müssen die Tests bzw. die zu testenden Betriebsfälle an den jeweiligen Anwendungs- bzw. Testfall zugeschnitten werden - d.h. ein System zum Testen des Satelliten bzw. seiner Subsysteme muss an die jeweiligen Wertbereiche der Missionsparameter (z.B. Spannung, Strom, Widerstand, Polarität, Temperatur, etc.) der jeweiligen Subsysteme und Schnittstellen angepasst werden.

Daher erfordern derartige Tests von Satelliten bzw. die entsprechenden Satelliten-Testsysteme eine Vielzahl von unterschiedlichen und auf den jeweiligen Testfall angepasste elektronische Schaltungen und/oder Baugruppen. Beispiele für Testbereiche bei einem Satelliten, bei welchen spezifische Testsysteme für eine Überprüfung der Funktion bzw. der Zusammenarbeit mit anderen Subsystemen notwendig sind, sind z.B. eine Testen des Pryosystem oder eine Simulation von Thermistor- und/oder Thermoelementen, welche beispielsweise für eine Temperaturkontrolle eingesetzt werden können.

Das führt zu einer großen Variantenvielfalt und Heterogenität bei einem Satellitentest-System, da die jeweiligen Schnittstellen für Tests und/oder Simulationen und die zugehörigen Elektronikbaugruppen individuell an die jeweiligen Missionserfordernisse (z.B. Parameter, etc.) angepasst werden müssen. Eine derartig spezifische Ausgestaltung eines Satelliten-Testsystems weist allerdings den Nachteil auf, dass dieses nur für eine spezielle Anwendung bzw. Mission zum Testen eines Satelliten eingesetzt werden kann. Das Satelliten-Testsystem ist daher nicht mehr flexibel einsetzbar, sondern einen meist kostenintensive, individuelle Lösung für eine speziellen Satelliten bzw. eine spezielle Satelliten-Mission. Es können mit diesem Satelliten-Testsystem z.B. nicht mehr andere Satelliten und/oder Subsysteme anderer Satelliten getestet werden.

Daher wurde versucht, Satelliten-Testsysteme bzw. die entsprechenden Schnittstellen flexibler und kostengünstiger zu gestalten. So besteht es beispielsweise die Möglichkeit, ein Satelliten-Testsystem bzw. die entsprechenden Schnittstellen aus z.B. Modulen auf Basis von Standardkomponenten, - baugruppen und/oder -bauteilen aufzubauen. Dadurch können die Testsysteme zwar leichter an den jeweiligen zu testenden Satelliten bzw. die jeweiligen Missionsparameter angepasst werden. Allerdings weist ein derartiges Modulkonzept beispielsweise Nachteile auf wie höheren Aufwand und Kosten bei der Integration. Es kann aber z.B. auch zu Problemen bei der Qualität der Test oder zu Obsoleszenzrisken kommen.

Aus der Schrift DE 10 2009 033 156 A1 ist eine Vorrichtung zum Messen und/oder Erzeugen von elektrischen Größen bekannt, welche einen externen Messanschluss umfasst, der mit einer zu testenden elektronischen Vorrichtung verbindbar ist. Diese Vorrichtung ist dazu eingerichtet, dass sowohl elektrische Größen gemessen als auch erzeugt werden können. Über den externen Messanschluss kann dabei neben einer Verbindung mit der zu testenden elektronischen Vorrichtung auch die Erzeugung der elektrischen Größe erfolgen. Allerdings weist die in der angeführten Schrift offenbarte Vorrichtung den Nachteil auf, dass keine flexible Einstellung der Betriebsart als Mess- oder Erzeugungsvorrichtung erfolgen kann. Damit kann die in der Schrift DE 10 2009 033 156 A1 offenbarte Vorrichtung nicht oder nur beschränkt an ein zu testendes System angepasst werden und ist daher für einen Einsatz als Satelliten-Testsystem nur bedingt geeignet. Ein Beispiel des Standes der Technik ist aus JPH1134765 bekannt.

### Darstellung der Erfindung

Der Erfindung liegt daher die Aufgabe zugrunde, ein Satelliten-Testsystem anzugeben, mit welchen auf einfache und kostengünstige Weise verschiedene Satelliten-Systeme und/oder Satelliten-Subsystem rasch und ohne große Adaptionen getestet und/oder simuliert werden können.

Erfindungsgemäß erfolgt die Lösung der Aufgabe durch ein Satelliten-Testsystem mit den in Anspruch 1 beschriebenen Merkmalen. Vorteilhafte Ausgestaltungen des Satelliten-Testsystems sind in den abhängigen Ansprüchen angeführt.

Gemäß der Erfindung ist beim Satelliten-Testsystem ein zweipoliger Anschluss vorgesehen, dessen beide Pole über eine Spannungsteiler aus einem gesteuerten Widerstand und einem weiteren Widerstand in der Weise verbunden sind, dass der zweipolige Anschluss in Abhängigkeit von einer Ansteuerung des gesteuerten Widerstands sowohl als zweipoliger, analoger Messeingang als auch als Spannungsquelle für Simulationszwecke verwendbar ist.

Der Hauptaspekt der erfindungsgemäß vorgeschlagenen Lösung besteht darin, dass das erfindungsgemäße Satelliten-Testsystem bzw. der zweipolige Anschluss in vorteilhafter Weise als Plattform für verschiedene Mess- und/oder Testaufgaben eingesetzt werden kann. Durch den gesteuerten Widerstand kann eine rasche und präzise Einstellung für die jeweilige Mess- und/oder Testaufgabe erfolgen. Die Implementierung des Satelliten-Testsystems ist allerdings weitgehend unabhängig von den jeweiligen spezifischen Projekt- bzw. Missionsanforderungen. Daher kann das erfindungsgemäße Satelliten-Testsystem bzw. der zweipolige Anschluss in vorteilhafter Weise zum Testen, Messen und/oder Simulieren von z.B. einer variablen Anzahl an Pyro- und/oder Thermistorschnittstellen oder Thermoelementen verwendet werden.

Es ist vorteilhaft, wenn der gesteuerte Widerstand über einen multiplizierenden Digital-Analog-Umwandler und eine zugehörigen ersten Operationsverstärker einstellbar ist. Auf diese Weise kann der gesteuerte Widerstand über eine digitale Eingabe rasch und einfach für die jeweiligen Testaufgaben eingestellt werden. Durch einen Digital-Analog-Umwandler, welche auch als Digital-Analog-Konverter oder D/A-Wandler bezeichnet wird, werden digitale Signale und/oder Werte in analoge Signale umgesetzt. Bei einem multiplizierenden D/A-Konverter wird das analoge Ausgangssignal (z.B. Spannung, Strom) als Produkt aus einem von außen zugeführten elektrischen Referenzsignal und dem angelegten digitalen Eingangswert generiert - d.h. der D/A-Konverter ist in seinem Signalbereich durch ein externes Signal (z.B. Referenzspannung) einstellbar. Das generierte, analoge Signal am Ausgang des D/A-Wandlers kann entweder als Spannung oder gegebenenfalls als Strom zur Verfügung stehen, wobei aufgrund von z.B. ungünstigen Impedanzen der Umsetzerschaltung häufig eine Aufbereitung notwendig ist. Die Aufbereitung des Signals wird dann von einer Verstärkerschaltung - wie z.B. einem Operationsverstärker - durchgeführt, durch welche beispielsweise dynamische Eigenschaften festgelegt und bestimmt werden. Ein Operationsverstärker ist ein elektronischer Verstärker, der einen invertierenden und einen nichtinvertierenden Eingang aufweist und meist eine sehr hohe Verstärkung Spannungssignalen durchführt.

Es ist auch günstig, wenn ein Bereich einer Spannungsausgabe des zweipoligen Anschlusses bzw. der durch den zweipoligen Anschluss generierten Spannungsquelle mittels einer Referenzspannung und dem Spannungsteiler, welcher den gesteuerten Widerstand umfasst, einstellbar ist. Dadurch kann auf einfache Weise der Bereich der Spannungsausgabe des Satelliten-Testsystems bzw. des zweipoligen Anschlusses derart eingestellt werden - z.B. im mV-Bereich, dass Thermoelemente beispielsweise für Testzwecke simuliert werden können. Thermoelemente bestehen aus einem Bauteil aus zwei unterschiedlichen und an einem Ende miteinander verbundenen Metallen. Von Thermoelementen kann durch Thermoelektrizität Wärme in elektrische Energie gewandelt werden, wobei eine Temperaturdifferenz eine Wärmefluss und eine Thermospannung erzeugt. In Bereich der Satellitentechnik können Thermoelemente beispielsweise für Temperatur-Kontrollsysteme oder zur Energieerzeugung verwendet werden.

Idealer Weise kann ein Bestimmen der Spannungsausgabe des zweipoligen Anschlusses über einen Analog-Digital-Umwandler und einen Spannungsteiler mit definierten Widerständen (d.h. Ohm'schen Widerständen mit fixen Werten) durchgeführt werden. Über diesen Schaltungsteil des Satelliten-Testsystem kann ein eingestellter Spannungswert bzw. eine Spannungsausgabe oder eine Einstellung des gesteuerten Widerstands überprüft und geregelt werden. Über einen zweiten Operationsverstärker wird dabei das Referenzsignal bzw. die Referenzspannung für den multiplizierenden D/A-Wandler in Abhängigkeit von einem Wert der gesteuerten Widerstand bzw. der Spannungsausgabe beeinflusst, wobei die Referenzspannung einer am zweipoligen Anschluss gemessenen Spannung proportional ist. Über den Analog-Digital-Umwandler, von welchem ein analoges Signal (z.B. Spannung, etc.) in ein digitales Signal umgesetzt wird, wird ein Wert von z.B. einer Spannung und damit indirekt ein eingestellter Wert des gesteuerten Widerstands in eine digitale Signal umgewandelt. Dieses Signal kann dann beispielsweise an eine Steuerlogik weitergeleitet und von dieser entsprechend verarbeitet werden. Idealer Weise ist die Spannungsausgabe derart ausgestaltet, dass die Spannungspegel mit so genannten Transistor-Transistor-Logikpegeln kompatibel ist. Damit können die Spannungsausgabe bzw. die Spannungspegel, welche durch den A/D-Wandler erzeugt werden, mittels logischer Schaltungen weiterverarbeitet werden.

Bei einer zweckmäßigen Ausgestaltung des erfindungsgemäßen Satelliten-Testsystems ist für eine Steuerung des gesteuerten Widerstands eine konfigurierbare Steuerlogik vorgesehen. Die konfigurierbare Steuerlogik kann beispielsweise als so genanntes Field Programmable Gate Array ausgeführt sein. Durch den Einsatz einer konfigurierbaren Steuerlogik wie z.B. eines FPGAs besteht die Möglichkeit einer digitalen Steuerung des gesteuerten Lastwiderstands in Abhängigkeit von einem analogen Messwert (z.B. Spannung), welcher am zweipoligen Anschluss des Satelliten-Testsystems gemessen wird. Auf diese Weise können dann auch sehr einfach z.B. nicht lineare Widerstände (z.B. Dioden, etc.) und/oder Impedanzen simuliert werden. So können z.B. verzögerte Strom-/Widerstandsänderungen nach einer Spannungsänderung, welche einer Induktivität entsprechen würden, simuliert werden.

Als gesteuerter Widerstand ist vorteilhafter Weise ein Feldeffekt-Transistor vorgesehen, von welchen ein einstellbarer Widerstand simuliert wird. Feldeffekt-Transistoren oder kurz FETs gehören zur Gruppe der unipolaren Transistoren, bei welchen nur ein Ladungstyp am Stromtransport beteiligt ist - je nach Bautyp können das Elektronen oder Löcher sein. Ein FET ist ein spannungsgesteuertes Schaltungselement, bei welchem über eine so genannte Gate-Source-Spannung ein Kanalquerschnitt und damit der Halbleiter-Widerstand reguliert wird, um so die Stärke des elektrischen Stroms und damit den Widerstandswert des FETs zu steuern. Damit kann auf einfache Weise über ein digitales Signal, den D/A-Wandler und den ersten Operationsverstärker des Satelliten-Testsystems die Gate-Source-Spannung des FETs derart gesteuert werden, dass der FET eine gewünschten Widerstandswert annimmt bzw. die Spannungsausgabe des zweipoligen Anschusses einen bestimmten Wert erreicht.

Des weiteren empfiehlt sich, wenn ein Einstellbereich des gesteuerten Widerstands zumindest einen Bereich von 0,1 Ohm und 100 kOhm umfasst, und wenn der Bereich der Spannungsausgabe des zweipoligen Anschlusses zumindest einen Spannungsbereich aufweist, durch welchen insbesondere Thermoelemente simulierbar sind. Durch einen derartigen Einstellbereich des gesteuerten Widerstand, durch welche auch so genannte Thermistoren simuliert werden können, und eine derartigen Bereich der Spannungsausgabe, welche z.B. für Thermoelemente im mV-Bereich liegt, kann das Satelliten-Testsystem sehr einfach und rasch an verschiedene Projektanforderungen angepasst werden und deckt eine relativ großen Parameterbereich für z.B. Spannung, Strom, Widerstand, etc. ab.

Bei einer bevorzugten Fortbildung der Erfindung wird für eine elektrische Isolation der konfigurierbaren Steuerlogik ein Isolierelement, insbesondere ein so genannter Gleichspannungswandler oder DC-DC-Wandler, vorgesehen. Durch einen DC-DC-Wandler wird die konfigurierbare Steuerlogik auf sehr einfache Weise von einer restlichen Schaltung des Satelliten-Testsystems potentialmäßig getrennt. Durch den DC-DC-Wandler kann z.B. eine am Eingang zugeführte Gleichspannung in eine Gleichspannung mit höherem bzw. mit niedrigerem Spannungsniveau umgewandelt werden, wodurch z.B. die Steuerlogik vor dem höheren Spannungsniveau des zweipoligen Anschlusses getrennt bzw. geschützt wird.

### Kurzbeschreibung der Zeichnung

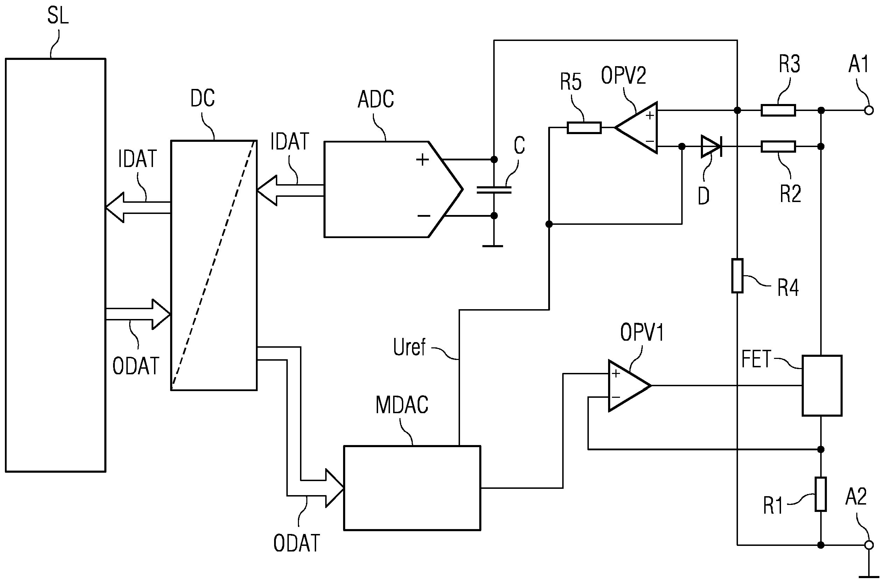

Die Erfindung wird nachfolgend in beispielhafter Weise anhand der beigefügten Figur 1 erläutert. Es zeigt Figur 1 beispielhaft einen schematischen Aufbau der erfindungsgemäßen Satelliten-Testsystems.

### Ausführung der Erfindung

Figur 1 zeigt beispielhaft und in schematischer Weise einen Aufbau des erfindungsgemäßen Satelliten-Testsystems, wobei der Einfachheit halber zusätzliche Versorgungsspannungen sowie Masseverbindungen bei Bauelementen, Taktsignal- und Steuerleitungen bei logischen bzw. digitalen Bauelementen weggelassen worden sind.

Das Satelliten-Testsystem in Figur1 umfasst einen zweipoligen Anschluss A1, A2, bei welchen beispielsweise ein erster Pol A1 einen positiven Pol darstellt und ein zweiter Pol A2 mit Masse verbunden ist. Der zweipolige Anschluss kann einerseits einen Messeingang für ein Messsignal (z.B. eine Spannung) und andererseits als Spannungsquelle verwendet werden, wobei der Bereich einer Spannungsausgabe beispielsweise in einem Bereich - insbesondere mVolt-Bereich - liegen sollte, sodass auch Thermoelemente simulierbar sind.

Die beiden Pole A1, A2 des zweipoligen Anschlusses A1, A2 sind über einen Spannungsteiler miteinander verbunden, wobei der Spannungsteiler aus einem gesteuerten Widerstand FET und einem weitern, ersten Widerstand R1 besteht. Der erste Widerstand ist beispielsweise als ohmscher Widerstand bzw. als Präzisionswiderstand mit einem Wert von 100 mOhm ausgeführt. Der Einstellbereich des gesteuerten Widerstands FET, welcher z.B. als Feldeffekt-Transistor ausgeführt sein kann, sollte zumindest einen Bereich von 0,1 Ohm bis 100 kOhm umfassen. Auf diese Weise können nicht nur verschiedene Lasten dargestellt, sondern z.B. auch Thermistoren simuliert werden. Ein Thermistor ist ein variabler elektrischer Widerstand, dessen Wert durch eine Temperaturänderung reproduzierbar variierbar ist.

Eine Einstellung des gesteuerten Lastwiderstands FET erfolgt über einen multiplizierenden Digital-Analog-Umwandler MDAC mit einer Referenzspannung Uref, welche beispielsweise in den multiplizierenden Digital-Analog-Umwandler MDAC eingebaut oder integriert sein kann. Durch die Referenzspannung Uref ist der Digital-Analog-Umwandler MDAC in seinem Signalbereich von außen einstellbar. Durch einen zugehörigen ersten Operationsverstärker OPV1 wird eine Regelschleife gebildet, welcher gemeinsam mit dem ersten Widerstand R1 die Funktion aufweist, einen Strom durch den ersten Widerstand R1 derart einzustellen, dass dieser Strom der Referenzspannung Uref proportional ist. Dabei wird z.B. bei einem Feldeffekt-Transistor als gesteuerter Widerstand FET vom Ausgang des ersten Operationsverstärker OPV1 die so genannte Gate-Source-Spannung bereitgestellt, über welche ein Kanalquerschnitt und damit der Halbleiter-Widerstand des Feldeffekt-Transistors reguliert wird, um so die Stärke des elektrischen Stroms und damit den Widerstandswert des Feldeffekt-Transistors FET zu steuern.

Die digitalen Daten ODAT, welche eine Einstellung des gesteuerten Widerstands FET bzw. auch einen Bereich der Spannungsausgabe genauer festlegen, werden von einer konfigurierbaren Steuerlogik SL vorgegeben und gesteuert. Als konfigurierbare Steuerlogik SL kann z.B. eine so genanntes Field Programmable Gate Array oder FPGA vorgesehen sein, welche über ein Isolierelement DC - wie z.B. einen Gleichspannungswandler bzw. DC-DC-Wandler - spannungsmäßig von dem Digital-Analog-Umwandler MDAC getrennt ist. Über das Isolierelement DC werden die digitalen Daten ODAT zur Einstellung des gesteuerten Widerstands FET von der Steuerlogik SL zum Digital-Analog-Umwandler MDAC geleitet. Vom Digital-Analog-Umwandler MDAC werden die digitalen Daten ODAT in ein analoges Signal - üblicherweise in eine Spannung - umgewandelt. Dabei werden die digitalen Daten ODAT mit der Referenzspannung Uref multipliziert.

Durch den ersten Operationsverstärker OPV1 wird dann das analoge Signal verstärkt und zum Einstellen des Stroms durch den ersten Widerstand R1 bzw. zum Steuern des gesteuerten Widerstands FET verwendet, wobei der eingestellte Strom im ersten Widerstand R1 der Referenzspannung Uref proportional ist. Über die Regelschleife mit dem ersten Operationsverstärker OPV1 und mit Hilfe des multiplizierenden Digital-Analog-Konverter MDAC, des gesteuerten Widerstands FET und des ersten Widerstands R1 kann dann zwischen dem zweipoligen Anschluss A1, A2 ein Widerstand eingestellt werden, welcher einen vielfachen Wert des ersten Widerstands R1 aufweist.

Für eine Regelung bzw. Steuerung der Einstellung oder um den zweipoligen Anschluss A1, A2 auch als Messeingang zu nutzen, ist ein Analog-Digital-Umwandler ADC vorgesehen. Weiters weist die Schaltungsanordnung für das erfindungsgemäße Satelliten-Testsystem einen zweiten Operationsverstärker OPV2 sowie die Widerstände R2, R3, R4 und R5 auf. Die weiteren Widerstände R2, R3, R4, R5 könnten dabei beispielsweise wie folgt ausgeführt sein: ein zweiter Widerstand R2 kann eine Wert von 150 Ohm, ein dritter Widerstand R3 einen Wert von 1 MOhm, ein vierter Widerstand R4 eine Wert von 100 kOhm und ein fünfter Widerstand eine Wert von 10 kOhm aufweisen. Zusätzlich weist ein negativer Eingang des zweiten Operationsverstärkers eine Diode D auf. Durch die Diode D soll verhindert werden, dass eine vergleichsweise hohe Spannung, welche insbesondere am Anschluss A1 auftreten kann, zu einem Schaden am multiplizierenden Digital-Analog-Umwandler MDAC führt.

Eine Bestimmung des Messsignals - z.B. eine Spannung, welche zwischen den beiden Polen A1, A2 des Anschlusses A1, A2 anliegt, - bzw. eine Spannungsbestimmung erfolgt über eine Spannungsteiler, welcher von den Widerständen R3, R4 gebildet wird, und dem Analog-Digital-Umwandler ADC. Diese Spannung ist wegen der Widerstände R3, R4 der Referenzspannung Uref für den multiplizierenden Digital-Analog-Umwandler MDAC proportional. Dieses Messsignal, welches am zweipoligen Anschluss A1, A2 festgestellt wird, wird an den Analog-Digital-Umwandler ADC übermittelt, welche mit einem Kondensator C (z.B. 47 pFarad) abgeschlossen ist. Vom Analog-Digital-Umwandler ADC wird das Messsignal, welches als analoges Signal vorliegt, in ein digitales Signal IDAT umgewandelt.

Durch das Isolierelement DC - z.B. durch den Gleichspannungswandler DC - ist der Analog-Digital-Umwandler ADC ebenfalls von der Steuerlogik SL spannungsmäßig getrennt bzw. isoliert. Über das Isolierelement DC wird das digitalisierte Signal IDAT an die Steuerlogik SL weitergeleitet. Von der Steuerlogik SL kann dann dieses Signal IDAT als eingehendes Datensignal verarbeitet werden und je nach dem festgestellten Messwert können dann wieder entsprechende ausgehende Daten ODAT an den multiplizierenden Digital-Analog-Umwandler MDAC übertragen werden, um beispielsweise eine Änderung des eingestellten Widerstandswertes vorzunehmen. Auf diese Weise kann sehr rasch und präzis eine Einstellung eines linearen Widerstands FET erfolgen. Es besteht aber auch die Möglichkeit, weitere Schaltelemente wie z.B. Induktivitäten zu simulieren.

Der zweite Operationsverstärker OPV2 des erfindungsgemäßen Satelliten-Testsystems hat dabei die Aufgabe, die am aus dem dritten und vierten Widerstand R3, R4 gebildeten Spannungsteiler anliegende geteilte Spannung dem multiplizierenden Digital-Analog-Umwandler MDAC als Referenzspannung Uref (d.h. als Eingangswert) zur Verfügung zu stellen. Dies erfolgt idealer Weise z.B. ohne, dass eine extern an den Anschlüssen A1, A2 angeschlossene Spannungsquelle bzw. die Spannung am Analog-Digital-Umwandler ADC durch einen niedrigen Eingangswiderstand eines Eingangs der Referenzspannung Uref am Digital-Analog-Umwandler MDAC belastet wird bzw. ohne dass die Messung verfälscht wird. Damit wird vom Digital-Analog-Umwandler MDAC die Referenzspannung Uref, welche über den Spannungsteiler der Widerstände R3, R4 dem Messsignal zwischen den Anschlüssen A1, A2 proportional ist, mit dem digitalen Wert ODAT multipliziert und als Sollwert für den Strom über den ersten Widerstand R1 und den gesteuerten Widerstand FET verwendet. Über den ersten Operationsverstärker OPV1 kann damit dieser Strom sehr rasch der Spannung nachgeregelt werden und eine Serienschaltung aus erstem und gesteuertem Widerstand R1, FET verhält sich dann wie ein Widerstand mit einstellbarem Wert.

Weiterhin kann die Referenzspannung Uref, welche beispielsweise in den multiplizierenden Digital-Analog-Umwandler MDAC integriert oder eingebaut ist, dort z.B. in Ausgangsrichtung geschaltet werden. Dann wird von der Referenzspannung Uref die vom zweiten Operationsverstärker OPV2 über den fünften Widerstand R5 gelieferte Spannung dominiert. Dieser Zustand ist notwendig, um z.B. Thermoelemente zu simulieren. Für die anderen Simulationsvarianten (z.B. beliebige Lasten wie z.B. Widerstand, Thermistor, etc.) ist die Referenzspannung Uref in Eingangsrichtung geschaltet und stellt damit einen Eingangswert für den multiplizierenden Digital-Analog-Umwandler MDAC dar.

Das erfindungsgemäße Satelliten-Testsystem bietet die Möglichkeit einzeln elektrisch isolierte Messkänale zu realisieren, sodass diese voneinander unabhängig sind und sowohl in Serie als auch parallel geschaltet werden können. Zusätzlich wird durch den Ausbau des erfindungsgemäßen Satelliten-Testsystem bzw. des zweipoligen Anschlusses A1, A2 eine Wiederverwendbarkeit ermöglicht, für beispielsweise eine variable Anzahl von Pyro- und Thermistorschnittstellen, zur Simulation von Thermoelementen und/oder für digitale Ein- und Ausgabe. Durch den flächen- und kostenoptimierten Ausbau der erfindungsgemäßen Schaltung können außerdem mehrere dieser Schaltungen bzw. Messkanäle für verschiedene Messungen in einem Geräte kombiniert werden.

## Patentansprüche

1. Satelliten-Testsystem, welches insbesondere zum Testen und/oder Simulieren von Satelliten-Systemen geeignet ist, wobei ein zweipoliger Anschluss (A1, A2) vorgesehen ist, dessen beide Pole (A1, A2) über einen Spannungsteiler aus einem gesteuerten Widerstand (FET) und einem weiteren Widerstand (R1) in der Weise verbunden sind, dass der Anschluss (A1, A2) in Abhängigkeit von einer Ansteuerung (MDAC, Uref, OPV1) des gesteuerten Widerstands (FET) sowohl als zweipoliger Messeingang als auch als Spannungsquelle verwendbar ist, wobei, um den zweipoligen Anschluss (A1, A2) als Spannungsquelle zu verwenden, der gesteuerte Widerstand (FET) über einen multiplizierenden Digital-Analog-Umwandler (MDAC, Uref) und einen zugehörigen ersten Operationsverstärker (OPV1) einstellbar ist und ein Bereich einer Spannungsausgabe des zweipoligen Anschlusses (A1, A2) mittels einer Referenzspannung (Uref) und dem Spannungsteiler, welcher den gesteuerten Widerstand (FET) umfasst, einstellbar ist, und
wobei, um den zweipoligen Anschluss (A1, A2) als Messeingang zu nutzen, ein Analog-Digital-Umwandler (ADC) vorgesehen ist und das Satelliten-Testsystem einen zweiten Operationsverstärker (OPV2) sowie die Widerstände (R2, R3, R4 und R5) aufweist.

2. Satelliten-Testsystem nach Anspruch 1, wobei ein Bestimmen der Spannungsausgabe des zweipoligen Anschlusses (A1, A2) über einen Analog-Digital-Umwandler (ADC) und einen Spannungsteiler mit definierten Widerständen (R3, R4) durchführbar ist.

3. Satelliten-Testsystem nach einem der Ansprüche 1 oder 2, wobei dass für eine Steuerung des gesteuerten Widerstands (FET) eine konfigurierbare Steuerlogik (SL), insbesondere ein so genanntes Field Programmable Gate Array oder FPGA, vorgesehen ist.

4. Satelliten-Testsystem nach einem der Ansprüche 1 bis 3, wobei dass als gesteuerter Widerstand (FET) ein Feldeffekt-Transistor vorgesehen ist.

5. Satelliten-Testsystem nach einem der Ansprüche 1 bis 4, wobei ein Einstellbereich des gesteuerten Widerstands (FET) zumindest eine Bereich von 0,1 Ohm und 100 kOhm umfasst.

6. Satelliten-Testsystem nach einem der Ansprüche 1 bis 5, wobei der Bereich der Spannungsausgabe des zweipoligen Anschlusses (A1, A2) zumindest einen Spannungsbereich umfasst, durch welchen so genannte Thermoelemente simulierbar sind.

7. Satelliten-Testsystem nach einem der Ansprüche 1 bis 6, wobei für eine elektrische Isolation der konfigurierbaren Steuerlogik (SL) ein Isolierelement (DC), insbesondere ein so genannter Gleichspannungswandler oder DC-DC-Wandler, vorgesehen ist.

## Claims

1. Satellite test system, which is in particular suitable for testing and/or simulating satellite systems,
a two-pole connection (A1, A2) being provided, the two poles (A1, A2) of which are connected via a voltage divider consisting of a controlled resistor (FET) and a further resistor (R1), in such a way that the connection (A1, A2) can be used both as a two-pole measuring input and as a voltage source, depending on an activation (MDAC, Uref, OPV1) of the controlled resistor (FET),
in order to use the two-pole connection (A1, A2) as a voltage source, the controlled resistor (FET) being adjustable via a multiplying digital-analogue converter (MDAC, Uref) and an associated first operational amplifier (OPV1), and a range of a voltage output from the two-pole connection (A1, A2) being adjustable by means of a reference voltage (Uref) and the voltage divider which comprises the controlled resistor (FET), and
in order to use the two-pole connection (A1, A2) as a measuring input, an analogue-digital converter (ADC) is provided, and the satellite test system has a second operational amplifier (OPV2) and the resistors (R2, R3, R4 and R5).

2. Satellite test system according to Claim 1, wherein a determination of the voltage output from the two-pole connection (A1, A2) can be carried out via an analogue-digital converter (ADC) and a voltage divider having defined resistors (R3, R4).

3. Satellite test system according to either of Claims 1 and 2, wherein that a configurable control logic unit (SL), in particular a so-called Field Programmable Gate Array or FPGA, is provided for control of the controlled resistor (FET).

4. Satellite test system according to one of Claims 1 to 3, wherein that the controlled resistor (FET) provided is a field effect transistor.

5. Satellite test system according to one of Claims 1 to 4, wherein an adjustment range of the controlled resistor (FET) comprises at least a range from 0.1 ohm and 100 kohm.

6. Satellite test system according to one of Claims 1 to 5, wherein the range of the voltage output from the two-pole connection (A1, A2) comprises at least one voltage range by means of which so-called thermal elements can be simulated.

7. Satellite test system according to one of Claims 1 to 6, wherein an isolating element (DC), in particular a so-called direct voltage converter or DC-DC converter, is provided for electrical isolation of the configurable control logic unit (SL) .

## Revendications

1. Système de test pour satellite, convenant notamment au test et/ou à la simulation de systèmes de satellites,
dans lequel il est prévu une borne bipolaire (A1, A2) dont les deux pôles (A1, A2) sont reliés par l'intermédiaire d'un diviseur de tension constitué d'une résistance commandée (FET) et d'une autre résistance (R1) de manière à ce que la borne (A1, A2) puisse être utilisée non seulement en tant qu'entrée de mesure bipolaire, mais aussi en tant que source de tension, en fonction d'une commande (MDAC, Uref, OPV1) de la résistance commandée (FET),
dans lequel, pour utiliser la borne bipolaire (A1, A2) en tant que source de tension, la résistance commandée (FET) est réglable par l'intermédiaire d'un convertisseur numérique-analogique multiplicateur (MDAC, Uref) et d'un premier amplificateur opérationnel (OPV1) associé et une plage d'une sortie de tension de la borne bipolaire (A1, A2) est réglable au moyen d'une tension de référence (Uref) et du diviseur de tension qui comprend la résistance commandée (FET), et
dans lequel, pour utiliser la borne bipolaire (A1, A2) en tant qu'entrée de mesure, il est prévu un convertisseur analogique-numérique (ADC) et le système de test pour satellite comporte un second amplificateur opérationnel (OPV2) ainsi que les résistances (R2, R3, R4 et R5).

2. Système de test pour satellite selon la revendication 1,
dans lequel la détermination de la sortie de tension de la borne bipolaire (A1, A2) peut être effectuée par l'intermédiaire d'un convertisseur analogique-numérique (ADC) et d'un diviseur de tension ayant des résistances (R3, R4) définies.

3. Système de test pour satellite selon l'une des revendications 1 ou 2, dans lequel qu'il est prévu, pour commander la résistance commandée (FET), une logique de commande configurable (S1), en particulier un réseau de portes dit Field Programmable Gate Array ou FPGA.

4. Système de test pour satellite selon l'une des revendications 1 à 3, dans lequel qu'il est prévu un transistor à effet de champ en tant que résistance commandée (FET).

5. Système de test pour satellite selon l'une des revendications 1 à 4, dans lequel une plage de réglage de la résistance commandée (FET) comprend au moins une plage de 0,1 Ohms et 100 Kohms.

6. Système de test pour satellite selon l'une des revendications 1 à 5, dans lequel la plage de tension de sortie de la borne bipolaire (A1, A2) comprend au moins une plage de tension au moyen de laquelle des éléments dits thermoéléments peuvent être simulés.

7. Système de test pour satellite selon l'une des revendications 1 à 6, dans lequel il est prévu, pour isoler électriquement la logique de commande configurable (S1), un élément isolant (DC), en particulier un convertisseur dit de tension continue ou convertisseur DC-DC.
